# EUROPEAN PATENT SPECIFICATION

(11) **EP 1 806 550 B1**
(45) Date of publication and mention of the grant of the patent: **26.07.2017**
(21) Application number: 06405540.3
(22) Date of filing: 22.12.2006
(51) Int. Cl.: F25B 41/06

(54) **Motor operated valve**
Motorgesteuertes Ventil
Vanne actionnée par moteur

(30) Priority: 05.01.2006 JP 2006000947; 24.11.2006 JP 2006316749
(43) Date of publication of application: 11.07.2007
(73) Proprietor: Fujikoki Corporation, Tokyo (JP)
(72) Inventor: Mochizuki, Kenichi Fujikoki Corporation, Setagaya-ku (JP); Inoue, Yasushi Fujikoki Corporation, Setagaya-ku (JP)
(74) Representative: Moinas & Savoye SARL

(56) References cited:
- JP-A- 10 030 744
- JP-A- 2003 287 151
- JP-A- 2005 048 943
- US-A- 4 412 517

## Description

### BACKGROUND OF THE INVENTION

### Field of the invention

The present invention relates to a motor-operated valve that carries out flow control for a fluid such as a refrigerant used in an air conditioner that performs cooling or heating or dehumidifying operation.

### Description of the related art

Conventionally, in an air-conditioner that performs cooling or heating or dehumidifying operation, a motor-operated valve that controls the opening and closing or the degree of opening of the valve by using a motor has been used to carry out flow control of a refrigerant because the valve of this type provides greater ease of use.

For an air conditioner using the motor-operated valve, when the dehumidifying operation is performed in the middle of the night, the user dislikes the generation of an operation sound caused by the repeated on-off operations of the motor-operated valve, so that it is desirable to operate the motor-operated valve in a state in which the amount of refrigerant is throttled without fully closing the valve. Therefore, a motor-operated valve has been disclosed in which a notch or a wedge-shaped flaw is formed in a valve seat to provide a minute clearance between the valve seat and a valve element even in a state in which the valve is at a fully-closed position, by which a bleed port for securing a very low flow rate is formed (Patent Reference 1). In the case of this motor-operated valve, unfortunately, there arises a problem in that since the valve element comes into contact with the valve seat repeatedly during its operation, the bleed port wears and thus the flow rate of refrigerant changes easily.

Also, in a motor-operated valve used for a refrigerating cycle, a coil is energized to rotate a rotor, so that a valve stem having a needle-shaped valve element in one end portion comes into contact with and separates from the valve seat, by which the flow control is carried out. In order to control the flow rate properly, there is needed a stopper structure for base point determination for determining a position at which the valve element is opened and a position at which the valve element is closed. A stopper structure of the motor-operated control valve has been proposed, which can prevent for a long period of time, a phenomenon that exact base point determination deviates as the capacity of refrigerating cycle increases (Patent Reference 2) . However, there remains a problem with this stopper structure in a point of view of wear and low durability.
[Patent Reference 1] Japanese Patent Laid-Open No. 11-51514
[Patent Reference 2] Japanese Patent Laid-Open No. 2003-65454

Document JP 2005 048943 A discloses an electronic control valve comprising a valve stem mounted in a valve body so as to be movable in the axial direction. A valve element is able of coming close to and going away from an orifice in a valve chest side. The stator core of the stepping motor can be divided in 3 parts so that each solenoid coil can be easily change in case of one breaks down. The device is also provided with a valve that can automatically remove the dirt of the valve seat by means of a cleaning disk or a cleaning edge arranged on the valve stem. Therefore, no stopper restrict the movement of the valve stem downwardly towards the valve closing direction since the needle-shape valve element goes across the throat portion after having reached the closing position.

Document JP 2003 287151 relates to a structure for reducing the noise of a motor-operated valve which tends to be especially generated at the time of refrigerant passage. A guide part is arranged in the valve chest of the valve body. This guide part contacts with an outside surface of a valve stem and is formed in a cylindrical shape integrally with the valve body so as to surround the periphery. A valve element contacts with and separates from a valve seat in the valve chest by a driving mechanism by operation of a stepping motor, and adjusts a passing flow rate of the refrigerant between fluid inflow-outflow pipes. Since the valve stem is supported by the guide part, vibration of the valve element by the passing of the refrigerant can be restrained, so that the noise generated by the vibration of the valve element can be reduced.

Document JP 10 030744 discloses a motor-operated valve having a valve stem at the end of which is provided a valve element. The valve element is able to slide upwardly and downwardly into a valve seat in order to open and close the orifice respectively. This movement is limited by a stopper attached to the upper part of a bush linked to the valve body. The stopper is provided with a first projection coming against a second projection provided at the lower surface of the rotor. Consequently, the contact ensuing from these projections is made between the rotor (rotating element) and the bush bound to the valve body (fixed element).

Document US 4 480 614 relates to an idling speed control device of an internal combustion engine. This device comprises a valve shaft which cannot be rotated, but is able to slide in the axial direction. Two stop pins are fixed onto the valve shaft (sliding element) and abut against the rotor (rotating element) in an axial extending slot when the valve shaft reaches its most advanced position or its most retracted position.

### SUMMARY OF THE INVENTION

An object of the present invention is to provide a motor-operated valve that solves the above-described problems and has increased durability.

To achieve the above object, the present invention provides a motor-operated valve including a valve body in which a valve chest and an orifice that is open to the valve chest are formed; a valve stem which is mounted in the valve body so as to be movable in the axial direction and has a valve element capable of coming close to and going away from the orifice in the valve chest side, which valve element is provided in the tip end portion thereof; and a driving mechanism which is additionally provided on the valve body to control the flow rate of a fluid passing through the orifice and has a stepping motor and a converting means for converting the rotation of the stepping motor into the axial movement of the valve stem, characterized in that the valve stem has a engaging portion for restricting the movement in the valve closing direction of the valve stem by engaging to a stopper formed on the valve body at the valve closing position of the valve element, which engaging portion is provided in an intermediate portion in the axial direction, and the valve element forms a small clearance between the valve element and the orifice at the valve closing position to form a bleed port.

According to this motor-operated valve, by driving the stepping motor and by converting the rotation of the stepping motor into the axial movement of the valve stem, the valve stem is moved in the axial direction in the valve body. The valve element provided in the tip end portion of the valve stem comes close to and goes away from the orifice to change the amount of opening of orifice, by which the flow rate of the fluid passing through the orifice can be controlled. At the valve closing position of the valve element, the engaging portion provided in the intermediate portion in the axial direction of the valve stem engages to the stopper formed on the valve body so that the valve stem is stopped. Since the small clearance is provided between the valve element and the orifice at the valve closing position so as to form a bleed port, even at the fully closing position of valve, a small amount of fluid flows through the clearance between the valve element and the orifice. Therefore, a refrigerant flow path necessary for dehumidification can be secured, and also large pressure fluctuations occurring in the flow path, for example, at the time of the start of compressor can be delayed or relaxed, and thereby so-called initialize noise can be reduced.

According to the present invention, the bleed port is formed by the clearance between the valve element and the orifice, and the valve element does not come into contact with the orifice. Therefore, a motor-operated valve can be obtained, in which the bleed port is less liable to wear and thus the durability of the valve is high.

### BRIEF DESCRIPTION OF THE DRAWINGS

FIG. 1 is a longitudinal sectional view showing the whole of one example of a motor-operated valve in accordance with the present invention.
FIG. 2 is a sectional view enlargedly showing an essential portion of the motor-operated valve shown in FIG. 1.

### DETAILED DESCRIPTION OF THE PREFERRED EMBODIMENTS

An example of a motor-operated valve in accordance with the present invention will now be described with reference to the accompanying drawings.

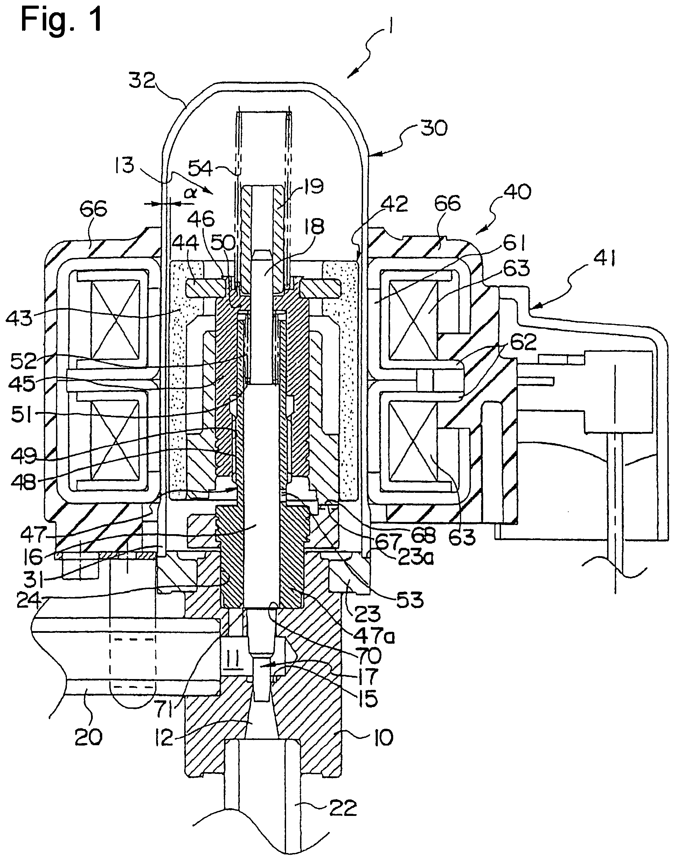

In FIG. 1, a motor-operated valve the whole of which is denoted by reference number 1 has a valve body 10, and in the valve body 10, a valve chest 11 and an orifice 12 that is open to the valve chest 11 are formed. Also, the valve body 10 is connected with pipes 20 and 22. The pipe 20 is a refrigerant introducing pipe that is connected to one side of the valve chest 11 of the valve body 10 to introduce carbon dioxide (gas), being used as a refrigerant, into the valve chest 11. The pipe 22 connected to a lower part of the valve chest 11 is a refrigerant discharging pipe. Above the valve body 10, a driving mechanism 13 for driving the valve to open and close it is additionally provided.

In the driving mechanism 13, a lower end portion 31 of a can 30, which is a cylindrical pressure vessel, is sealingly joined by butt welding to a step portion 23a formed in a stainless steel-made, collar-shaped receiving member 23 fixed to an upper part of the valve body 10, and thereby is attached to the upper part of the valve body 10. The can 30 is formed into a bottomed cylinder shape having a semispherical ceiling bottom 32 by subjecting a nonmagnetic metal sheet such as a stainless steel sheet to deep drawing etc., and the interior of the can 30 is kept in a gastight state. On the outside of the can 30, a stator unit 41 of a stepping motor 40 is equipped, and on the inside of the can 30, a rotor unit 42 of the stepping motor 40 is rotatably disposed with a predetermined clearance α being provided.

The rotor unit 42 includes a rotor 43 consisting of a plastic magnet formed with a magnetic material mixed with a resin and a screw feeding member 45 having a cylindrical shape opening downward, which is connected to the rotor 43 via a ring member 44. An example of material for the rotor 43 may be a Nd-Fe-B based rare-earth plastic magnet. The screw feeding member 45 also has a function as a valve stem holder for holding a valve stem 16, described later. In this embodiment, the ring member 44 is formed by a brass-made metal ring inserted when the rotor 43 is molded. The upper protrusion of the screw feeding member 45 is fixed to the ring member 44 by a staking portion 46, by which the rotor 43, the ring member 44, and the screw feeding member 45 are connected integrally to each other.

The brass-made valve stem 16 is moved up and down in the valve body 10 by the driving mechanism 13. The lower end of the valve stem 16 is formed as a needle-shaped valve element 17. The opening of the orifice 12 to the valve chest 11 side forms a valve port 15. The valve element 17 goes away from or comes close to the orifice 12 to open or close the valve port 15, by which the flow rate of a fluid (refrigerant) passing through the orifice 12 is controlled.

The driving mechanism 13 further has a cylindrical guide bush 47 in which the valve stem 16 is slidably inserted. At the outer periphery of the guide bush 47, the above-described screw feeding member 45 is fitted and engaged threadedly. A lower end portion 47a of the guide bush 47 is formed so as to have a larger diameter, and is fixed under pressure (or threadedly) in an engagement hole 24 provided in the valve body 10. Near the central portion of the guide bush 47, a male screw portion 48 is formed. The screw feeding member 45 is formed with a female screw portion (moving screw portion) 49 that engages threadedly with the male screw portion (fixed screw portion) 48 of the guide bush 47. The screw feeding member 45 and the guide bush 47 constitute a converting means for converting the rotation of the rotor 43 into the axial movement of the valve stem 16.

In the central portion of a ceiling bottom 50 of the screw feeding member 45, an upper small-diameter portion 18 of the valve stem 16 is inserted. The upper end portion of the upper small-diameter portion 18 is fixed under pressure to a nut 19 serving as a restricting member put on the top surface of the ceiling bottom of the screw feeding member 45.

The valve stem 16 is always urged downward, namely, in the valve closing direction by a coil spring 52 serving as a buffering spring member compressedly provided between the ceiling bottom 50 of the screw feeding member 45 and an intermediate step portion 51 of the valve stem 16. The movement in the valve closing direction of the valve stem 16 with respect to the screw feeding member 45 is limited by the contact of the nut 19 to the screw feeding member 45. In the side surface of the guide bush 47, an equalizing hole 53 is formed to attain pressure equalization in the valve chest 11 and the can 30. On the ceiling bottom 50 of the screw feeding member 45, a restoring spring 54 consisting of a coil spring is provided. When the moving screw portion 49 of the screw feeding member 45 disengages from the fixed screw portion 48 of the guide bush 47, the restoring spring 54 comes into contact with the inner surface of the can 30 and acts so as to restore the engagement of the moving screw portion 49 with the fixed screw portion 48.

The statorunit 41 mounted on the outside of the can 30 includes a yoke 61 formed of a magnetic material, upper and lower stator coils 63, 63 wound on the yoke 61 via a bobbin 62, and a resin mold cover 66.

In the large-diameter lower end portion 47a of the guide bush 47, a relatively short and generally cylindrical lower stopper body (fixed stopper) 67, which forms one part of a stopper mechanism, is fixed. At the outer periphery of the screw feeding member 45, a relatively tall and generally cylindrical upper stopper body (moving stopper) 68, which forms the other part of the stopper mechanism, is fixed.

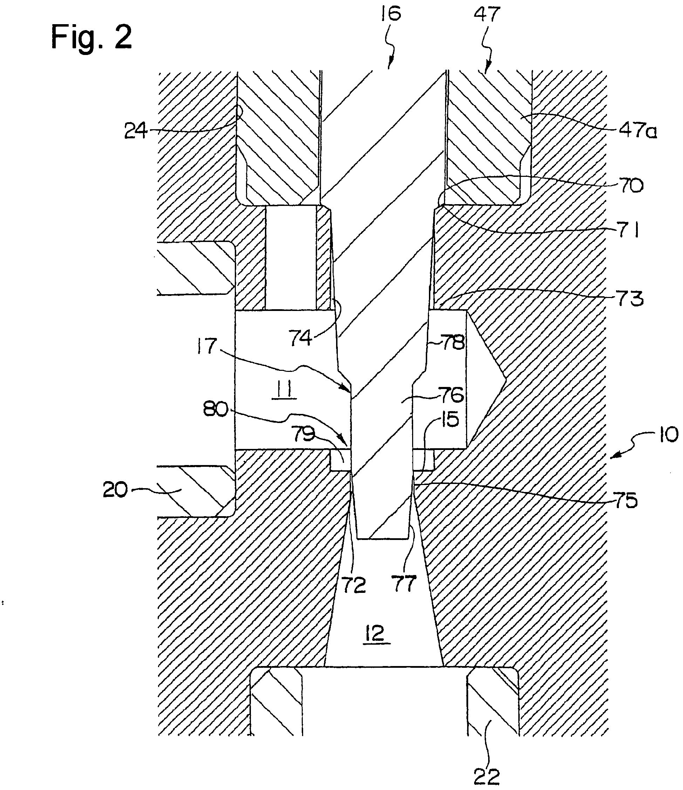

FIG. 2 is a sectional view enlargedly showing an essential portion of the motor-operated valve shown in FIG. 1. In FIG. 2, the valve stem 16 has a engaging portion 71 in an intermediate portion in the axial direction, the engaging portion 71 being used to engage the valve stem 16 to a stopper 70 formed on the valve body 10 at the valve closing position of the valve element 17 shown in the figure. The valve element 17 is formed with a small clearance between the valve element 17 and the orifice 12, forming a bleed port. Therefore, the valve element 17 does not come into contact with the peripheral edge portion of the valve port 15. The valve element 17 allows small amount of fluid to flow through the clearance 72 even at the fully closing position shown in the figure. Therefore, the refrigerant flow rate necessary at the dehumidifying time can be secured, and also large pressure fluctuations occurring in the flow path, for example, at the time of the start of compressor of a refrigerating cycle can be delayed or relaxed, and thereby so-called initialize noise can be reduced. Also, since the stop position of the valve stem 16 at which the engaging portion 71 comes into contact with the stopper 70 is a limit position (base point of vertical lift of valve stem) at which the valve stem 16 does not lower further, a driving force of the stepping motor 40 for further lowering the valve stem 16 from this position is not needed, so that no unnecessary load is imposed on the stepping motor 40.

The stopper 70 is formed on the end edge portion of an insertion hole 74 formed in a wall portion 73 of the valve chest 11 facing to the opening of the orifice 12 in the valve body 10 and through which the valve stem 16 is inserted. Also, the engaging portion 71 of the valve stem 16 is formed as a diameter difference on the peripheral surface of the valve stem 16. By constructing the stopper 70 and the engaging portion 71 in this manner, this stopper mechanism can be formed by simple machining such as cutting or forging, which contributes to the reduction in manufacturing cost of the motor-operated valve. The portion of the valve stem 16 ranging from the engaging portion 71 to the valve element 17 forms a tapered stem portion 78, so that this portion does not interfere with the insertion hole 74 and the orifice 12.

In this example, the orifice 12 is formed as a tapering-away taper hole that is open to the valve chest 11 in a throat portion 75. Also, the valve element 17 has a stem-shapedportion 76 having the same cross section and a tapered portion 77 which is connected to the tip end side of the stem-shaped portion 76 and has a diameter decreasing toward the tip end thereof. At the valve closing position of the valve element 17, a portion close to the tapered portion 77 in the stem-shaped portion 76 is positioned in the throat portion 75, by which when the driving mechanism 13 drives the valve stem 16 from the fully closing position toward the valve opening direction, the tapered portion 77 of the valve element 17 immediately separates from the throat portion 75 of the orifice 12, so that the response of the degree of valve opening can be enhanced. Around the opening of the throat portion 75 of the orifice 12, a ring-shaped counterbored portion 79 is formed. By forming the counterbored portion 79 around the opening of the throat portion 75, burrs produced when the throat portion 75 is formed can be removed. Also, the counterbored portion 79 can prevent the interference of the valve element 17 with the throat portion 75, and can contribute to smooth opening/closing movement of the valve element 17.

For the motor-operated valve 1 constructed as described above, in the driving mechanism 13, the stepping motor 40 is driven to convert the rotation of the stepping motor 40 into the axial movement of the valve stem 16, by which the valve stem 16 is moved in the axial direction in the valve body 10. The valve element 17 provided in the tip end portion of the valve stem 16 comes close to or goes away from the orifice 12 to change the opening amount of the valve port 15 of the orifice 12, by which the flow rate of the fluid passing through the orifice 12 can be controlled. Specifically, when the stator coils 63, 63 are energized by feeding an electrical current in one direction, the rotor 43 and the screw feeding member 45 are rotated in one direction with respect to the guide bush 47 fixed to the valve body 10. By the screw feed of the fixed screw portion 48 of the guide bush 47 and the moving screw portion 49 of the screw feeding member 45, for example, the screw feeding member 45 is moved downward. The downward movement of the screw feeding member 45 lowers the valve stem 16 via the coil spring 52, so that the valve element 17 intrudes into the orifice 12, and the valve port 15 is substantially closed. The clearance 72 is present between the valve element 17 and the orifice 12 to form the bleed port, so that a small amount of fluid can flow through the clearance 72 even if the valve is in the so-called closed state.

When the engaging portion 71 engages to the stopper 70 and the valve port 15 is closed, the upper stopper body 67 is not yet in contact with the lower stopper body 68, and the rotor 43 and the screw feeding member 45 further rotate and lower while the valve element 17 closes the valve port 15. At this time, since the screw feeding portion 45 lowers with respect to the valve stem 16, the coil spring 52 is compressed, by the buffering operation of which the downward lowering force of the screw feeding member 45 is absorbed. Subsequently, when the rotor 43 further rotates and the screw feeding member 45 lowers, the upper stopper body 67 comes into contact with the lower stopper body 68, so that even if the energization to the stator coils 63, 63 is continued, the lowering motion of the screw feeding member 45 is stopped compulsorily. Thereby, the rotation base point in the rotation control of the stepping motor is given. Also, since the stopper bodies 67 and 68 come into contact with each other while being buffered by the coil spring 52, the valve is less liable to wear and thus the durability thereof is high.

On the other hand, when the stator coils 63, 63 are energized by feeding an electrical current in the other direction, the rotor 43 and the screw feeding member 45 are rotated in the direction reverse to the direction described above with respect to the guide bush 47 fixed to the valve body 10. By the screw feed of the fixed screw portion 48 of the guide bush 47 and the moving screw portion 49 of the screw feeding member 45, the screw feeding member 45 is moved upward. The valve element 17 at the lower end of the valve stem 16 separates from the orifice 12, and the valve port 15 is opened, by which the refrigerant passes through the valve port 15. In this case, the effective opening area of the valve port 15, namely, the flow rate of the passing refrigerant can be regulated by the amount of rotation of the rotor 30. Since the amount of rotation of the rotor 30 is controlled by the number of pulses applied to the stepping motor 40, the flow rate of the passing refrigerant can be regulated with high accuracy.

## Claims

1. A motor-operated valve (1) comprising a valve body (10) in which a valve chest (11) and an orifice (12) that is open to the valve chest (11) are formed; a valve stem (16) which is mounted in the valve body (10) so as to be movable in the axial direction and has a valve element (17) capable of coming close to and going away from the orifice (12) in the valve chest side, which valve element (17) is provided in the tip end portion thereof; and a driving mechanism (13) which is additionally provided on the valve body (10) to control the flow rate of a fluid passing through the orifice (12) and has a stepping motor (40) and a converting means (45, 47) for converting the rotation of the stepping motor (40) into the axial movement of the valve stem (16),
wherein the valve stem has an engaging portion (71) for restricting the movement in the valve closing direction of the valve stem (16) by engaging to a stopper (70) formed on the valve body (10) at the valve closing position of the valve element (17), which engaging portion (71) is provided in an intermediate portion in the axial direction, and
wherein the valve element (17) forms a small clearance (72) between the valve element (17) and the orifice (12) at the valve closing position to form a bleed port,
**characterized in that** said converting means (45, 47) comprise
- a rotating screw feeding member (45) having a female screw portion (49) and
- a fixed cylindrical guide bush (47) having a male screw portion (48) threadedly engaging with said female screw portion (49);
- said valve stem (16) being inserted in said fixed cylindrical guide bush (47) and being able to move axially with respect to it,
and wherein a stopper mechanism (67, 68) is provided between the screw feeding member (45) and the valve body (10) to stop the screw feeding member (45) after the screw feeding member has further moved continuously in the valve closing direction of the valve stem (16) in a state in which the engaging portion (71) is contacted to the stopper (70).

2. A motor-operated valve (1) according to claim 1, wherein said screw feeding member (45) has a ceiling bottom (50) and said valve stem (16) has an intermediate step portion (51), a coil spring (52) being provided between said ceiling bottom (50) and said intermediate step portion (51) in order to urge said valve stem (16) in the valve closing direction.

3. A motor-operated valve (1) according to claim 2, wherein said valve stem (16) comprises a limiting member (19) for limiting its movement in the valve closing direction with respect to the screw feeding member (45).

4. The motor-operated valve (1) according to any one of claims 1 to 3, **characterized in that** the orifice (12) is formed as a tapering-away taper hole that is open to the valve chest (11) in a throat portion (75) ; the valve element (17) has a stem-shaped portion (76) having the same cross section and a tapered portion which is connected to the tip end side of the stem-shaped portion and has a diameter decreasing toward the tip end thereof; and at the valve closing position of the valve element (17), a portion close to the tapered portion in the stem-shaped portion (76) is positioned in the throat portion (75).

5. The motor-operated valve (1) according to any one of claims 1 to 4, **characterized in that** said engaging portion (71) and the corresponding portion of said stopper (70) have a tapered shape.

## Patentansprüche

1. Ein motorbetriebenes Ventil (1) umfassend einen Ventilkörper (10), in welche eine Armatur (11) und eine Öffnung (12), die zur Armatur (11) hin offen ist, geformt sind; einen Ventilschaft (16), der im Ventilkörper (10) derart angeordnet ist, dass er in axialer Richtung beweglich ist und ein Ventilelement (17) aufweist, welches dazu geeignet ist, seitens der Armatur nahe an die Öffnung (12) heran und sich von ihr weg zu bewegen, wobei das Ventilelement (17) im spitzen Endbereich der Armatur angeordnet ist; und einen Antriebsmechanismus (13), der zusätzlich auf dem Ventilkörper (10) bereitgestellt ist, um die Durchflussmenge einer Flüssigkeit, die durch die Öffnung (12) fließt, zu kontrollieren und einen Schrittmotor (40) aufweist und eine Wandel-Einrichtung (45, 47), die die Rotation des Schrittmotors (40) in die axiale Bewegung des Ventilschafts (16) umwandelt,
wobei der Ventilschaft einen Anschlagbereich (71) aufweist, der die Bewegung des Ventilschafts (16) durch Anschlagen an einem auf dem Ventilkörper (10) an der Schließposition des Ventilelements (17) angeformten Anschlagmittel (70) in Ventilschließrichtung begrenzt, wobei der Anschlagbereich (71) in einem mittleren Teil in axialer Richtung angeordnet ist und
wobei das Ventilelement (17) einen kleinen Spalt (72) zwischen dem Ventilelement (17) und der Öffnung (12) in der Ventilschließposition bildet, um eine Auslassöffnung zu bilden,
**dadurch gekennzeichnet, dass** die genannte Wandel-Einrichtung (45, 47) aufweist
• ein schraubdrehendes Vorschubglied (45) mit einem Innengewindeteil (49) und
• eine feste zylindrische Führungshülse (47) mit einem Außengewinde (48), welche schraubverbunden in das genannte Innengewinde (49) eingreift;
• wobei der genannte Ventilschaft (16) in der genannten festen zylindrischen Führungshülse (47) einliegt und sich axial in ihr bewegen kann,
und wobei ein Anschlagmechanismus (67, 68) zwischen dem schraubdrehenden Vorschubglied (45) und dem Ventilkörper (10) vorgesehen ist, um das schraubdrehende Vorschubglied (45), nachdem das schraubdrehende Vorschubglied kontinuierlich weiter in Schließrichtung des Ventilschafts bewegt wurde, anzuhalten, sobald der Anschlagbereich (71) das Anschlagmittel (70) berührt hat.

2. Ein motorbetriebenes Ventil (1) gemäß Anspruch 1, wobei das genannte schraubdrehende Vorschubglied (45) einen Deckenboden (50) aufweist und der genannte Ventilschaft (16) einen Zwischenstufenbereich (51) aufweist, wobei eine Schraubenfeder (52) zwischen dem genannten Deckenboden (50) und dem genannten Zwischenstufenbereich (51) vorgesehen ist um den Ventilschaft (16) in die Ventilschließrichtung zu drängen.

3. Ein motorbetriebenes Ventil (1) gemäß Anspruch 2, wobei der genannte Ventilschaft (16) ein Begrenzungsteil (19) aufweist, um seine zur Bewegung in Ventilschließrichtung gegenüber dem schraubdrehenden Vorschubglied (45) zu begrenzen.

4. Das motorbetriebene Ventil (1) gemäß einem der Ansprüche 1 bis 3, **dadurch gekennzeichnet, dass** die Öffnung (12) als ein sich nach unten verjüngendes Kegel-Loch ausgebildet ist, welches zur Armatur (11) hin in einem Halsbereich (75) geöffnet ist; das Ventilelement (17) einen schaftförmigen Bereich (76) aufweist mit dem selben Querschnitt und einem kegelförmigen Bereich, der mit der spitzen Endseite des schaftförmigen Bereiches verbunden ist und einen in Richtung Endspitze abnehmenden Durchmesser aufweist; und in der Ventilschließposition des Ventilelements (17) ein Bereich nahe des kegelförmigen Bereichs im schaftförmigen Bereich (76) in dem Halsbereich (75) angeordnet ist.

5. Das motorbetriebene Ventil (1) gemäß einem der Ansprüche 1 bis 4, **dadurch gekennzeichnet, dass** der Anschlagbereich (71) und der korrespondierende Bereich des Anschlagmittels (70) eine Kegelform aufweisen.

## Revendications

1. Soupape actionnée par moteur (1), comprenant un corps de soupape (10) dans lequel un compartiment de soupape (11) et un orifice (12) qui est ouvert vers le compartiment de soupape (11) sont formés; une tige de soupape (16) qui est montée dans le corps de soupape (10) de manière à être mobile dans la direction axiale et qui comprend un élément de soupape (17) capable de se rapprocher et de s'éloigner de l'orifice (12) dans le côté de compartiment de soupape, ledit élément de soupape (17) étant prévu dans la partie d'extrémité de pointe de celui-ci; et un mécanisme d'entraînement (13) qui est en outre prévu sur le corps de soupape (10) afin de commander le débit de fluide qui passe à travers l'orifice (12) et qui comprend un moteur pas à pas (40) et des moyens de conversion (45, 47) pour convertir la rotation du moteur pas à pas (40) en un déplacement axial de la tige de soupape (16),
dans laquelle la tige de soupape comprend une partie d'engagement (71) pour empêcher le déplacement dans la direction de fermeture de soupape de la tige de soupape (16) en s'engageant sur un arrêt formé (70) sur le corps de soupape (10) à la position de fermeture de soupape de l'élément de soupape (17), ladite partie d'engagement (71) étant prévue dans une partie intermédiaire dans la direction axiale, et
dans laquelle l'élément de soupape (17) forme un petit jeu (72) entre l'élément de soupape (17) et l'orifice (12) à la position de fermeture de soupape afin de former un orifice de purge,
**caractérisée en ce que** lesdits moyens de conversion (45, 47) comprennent:
- un élément d'alimentation à vis rotative (45) présentant une partie de vis femelle (49), et
- une douille de guidage cylindrique fixe (47) présentant une partie de vis mâle (48) qui s'engage de façon vissée avec ladite partie de vis femelle (49);
- ladite tige de soupape (16) étant insérée dans ladite douille de guidage cylindrique fixe (47) et étant capable de se déplacer axialement par rapport à celle-ci,
et dans laquelle un mécanisme d'arrêt (67, 68) est prévu entre l'élément d'alimentation à vis (45) et le corps de soupape (10) pour arrêter l'élément d'alimentation à vis (45) après que l'élément d'alimentation à vis se soit déplacé davantage de façon continue dans la direction de fermeture de soupape de la tige de soupape (16) dans un état dans lequel la partie d'engagement (71) est mise en contact avec l'arrêt (70).

2. Soupape actionnée par moteur (1) selon la revendication 1, dans laquelle ledit élément d'alimentation à vis (45) comprend un fond plancher (50) et ladite tige de soupape (16) comprend une partie de gradin intermédiaire (51), un ressort hélicoïdal (52) étant prévu entre ledit fond plancher (50) et ladite partie de gradin intermédiaire (51) dans le but de pousser ladite tige de soupape (16) dans la direction de fermeture de soupape.

3. Soupape actionnée par moteur (1) selon la revendication 2, dans laquelle ladite tige de soupape (16) comprend un élément limiteur (19) qui sert à limiter son déplacement dans la direction de fermeture de soupape par rapport à l'élément d'alimentation à vis (45).

4. Soupape actionnée par moteur (1) selon l'une quelconque des revendications 1 à 3, **caractérisée en ce que** l'orifice (12) est formé comme un trou conique effilé qui est ouvert vers le compartiment de soupape (11) dans une partie de gorge (75); l'élément de soupape (17) comprend une partie en forme de tige (76) présentant la même section transversale et une partie conique qui est connectée au côté d'extrémité de pointe de la partie en forme de tige et présente un diamètre qui diminue en direction de l'extrémité de pointe de celle-ci; et dans la position de fermeture de soupape de l'élément de soupape (17), une partie proche de la partie conique dans la partie en forme de tige (76) est positionnée dans la partie de gorge (75).

5. Soupape actionnée par moteur (1) selon l'une quelconque des revendications 1 à 4, **caractérisée en ce que** ladite partie d'engagement (71) et la partie correspondante dudit arrêt (70) ont une forme conique.
